# EUROPÄISCHE PATENTANMELDUNG

(11) **EP 2 952 701 A1**
(43) Veröffentlichungstag der Anmeldung: **09.12.2015**
(21) Anmeldenummer: 14171096.2
(22) Anmeldetag: 04.06.2014
(51) Int. Cl.: F01K 9/00, F28B 9/00

(54) **Dampf-/Wärmekraftwerk und Verfahren zum Betreiben des Dampf-/Wärmekraftwerks**

(71) Anmelder: Siemens Aktiengesellschaft, 80333 München (DE)
(72) Erfinder: Auge, Andreas, 45149 Essen (DE); Brück, Stefan, 45470 Mülheim an der Ruhr (DE); Jäger, Philippe, 45549 Spockhövel (DE)

(57) **Zusammenfassung**

Die Erfindung betrifft ein Dampf-/Wärmekraftwerk mit einem einen Kondensator (1) aufweisenden Flüssigkeits-/Dampfkreislauf, aus dem stromauf des Kondensators (1) für eine variable Wärmeabgabe aus dem Dampf-/Wärmekraftwerk ein variabler Dampfmassenstrom entnehmbar ist, wobei der Kondensator (1) einen Hauptkondensator (2) und einen Hilfskondensator (3) aufweist, die derart eingerichtet sind, dass bei einem Unterschreiten eines Schwellenwerts des in den Kondensator (1) eintretenden Dampfmassenstroms lediglich der Hilfskondensator (3) betreibbar ist.

## Beschreibung

Ein Dampf-/Heizkraftwerk dient sowohl der Erzeugung von Strom als auch von Wärme in einem Kraft-Wärme-Kopplungsprozess. Zur Abgabe der Wärme wird Dampf aus dem Dampf-/Heizkraftwerk entnommen und beispielsweise in ein Fernwärmenetz eingespeist oder als ein Prozessgas für einen Produktionsprozess eingesetzt. Über die entnommene Menge an Dampf kann das Verhältnis aus erzeugtem Strom und abgegebener Wärme geregelt werden.

Das Dampf-/Heizkraftwerk weist zur Erzeugung von mechanischer Energie mindestens eine Dampfturbine und einen Kondensator auf, der den Dampf stromab der mindestens einen Dampfturbine kondensiert. Der Kondensator muss dabei derart ausgelegt sein, dass er bei Betriebszuständen des Dampf-/Heizkraftwerks, bei dem kein Dampf entnommen wird und eine maximale Menge an Strom erzeugt wird, eine große Menge an Dampf kondensieren kann. Bei Betriebszuständen, bei denen eine große Menge an Wärme abgegeben wird und der Kondensator nur eine geringe Menge an Dampf kondensiert, sinkt jedoch der Wirkungsgrad des Dampf-/Heizkraftwerks, weil bei dem Kondensator eine große Menge an Hilfsenergie ungenutzt eingesetzt wird, beispielsweise durch Betreiben der Kühlwasserpumpen.

Aufgabe der Erfindung ist es, ein Dampf-/Heizkraftwerk und ein Verfahren zum Betreiben des Dampf-/Heizkraftwerks zu schaffen, wobei das Dampf-/Heizkraftwerk einen hohen Wirkungsgrad hat.

Das erfindungsgemäße Dampf-/Wärmekraftwerk weist einen einen Kondensator aufweisenden Flüssigkeits-/Dampfkreislauf auf, aus dem stromauf des Kondensators für eine variable Wärmeabgabe aus dem Dampf-/Wärmekraftwerk ein variabler Dampfmassenstrom entnehmbar ist, wobei der Kondensator einen Hauptkondensator und einen Hilfskondensator aufweist, die derart eingerichtet sind, dass bei einem Unterschreiten eines Schwellenwerts des in den Kondensator eintretenden Dampfmassenstroms lediglich der Hilfskondensator betreibbar ist. Durch das Aufteilen des Kondensators in den Hauptkondensator und in den Hilfskondensator verbraucht der Kondensator bei Betriebszuständen unterhalb des Schwellenwerts, bei dem das Dampf-/Heizkraftwerk eine große Menge an Wärme abgibt, nur eine geringe Menge an Hilfsenergie, wodurch das Dampf-/Wärmekraftwerk einen hohen Wirkungsgrad hat.

Bevorzugt sind oberhalb des Schwellenwerts der Hauptkondensator und der Hilfskondensator gleichzeitig betreibbar. Dadurch wirkt der Hilfskondensator auch bei Betriebszuständen mit einer großen Menge an erzeugtem Strom mit beim Kondensieren des Dampfes. Dadurch muss vorteilhaft trotz des Vorsehens von Hauptkondensator und Hilfskondensator nicht mehr Kühlfläche vorgesehen werden, als dies der Fall wäre, wenn nur ein Hauptkondensator vorgesehen werden würde. Der Hauptkondensator und der Hilfskondensator sind bevorzugt getrennt voneinander betreibbar, indem der Hauptkondensator einen Hauptkühlfluidkreislauf und der Hilfskondensator einen Hilfskühlfluidkreislauf aufweist, wobei der Hauptkühlfluidkreislauf und der Hilfskühlfluidkreislauf unabhängig voneinander betreibbar sind. Dadurch kann unterhalb des Schwellenwerts lediglich der Hilfskühlfluidkreislauf von einem Kühlfluid durchströmt werden, wodurch nur eine geringe Pumpenleistung aufgebracht werden muss.

Der Hauptkondensator und der Hilfskondensator sind bevorzugt in einem einzigen Mantelgehäuse angeordnet. Es ist bevorzugt, dass der Kondensator einen einzigen Kondensatsammler aufweist, der die in dem Hauptkondensator und/oder Hilfskondensator gebildete Flüssigkeit auffängt. Durch die beiden Maßnahmen ist der Aufbau aus Hauptkondensator und Hilfskondensator vorteilhaft einfach und platzsparend.

Der Flüssigkeits-/Dampfkreislauf weist bevorzugt Dampfturbinen mit verschiedenen Druckniveaus auf, der variable Dampfmassenstrom ist bevorzugt stromauf der Dampfturbine mit der niedrigsten Druckstufe entnehmbar und der Hilfskondensator ist bevorzugt derart eingerichtet, dass mit ihm der entnommene Dampfmassenstrom kondensierbar ist. Es ist bevorzugt, dass der Hilfskondensator derart eingerichtet ist, dass mit ihm ein maximaler entnommener Dampfmassenstrom kondensierbar ist, bei dem die Dampfturbine mit der niedrigsten Druckstufe von keinem Massenstrom durchströmt wird. Dadurch kann vorteilhaft in einem Notfall der entnommene Dampfmassenstrom ohne eine zeitliche Verzögerung via den Kondensator in den Flüssigkeits-/Dampfkreislauf zurückgeführt werden.

Das erfindungsgemäße Verfahren zum Betreiben des erfindungsgemäßen Dampf-/Wärmekraftwerks weist die Schritte auf: - kein Entnehmen eines Dampfmassenstroms aus dem Flüssigkeits-/Dampfkreislauf für den Fall, dass das Dampf-/Wärmekraftwerk keine Wärme abgeben soll, und Betrieb des Hauptkondensators und des Hilfskondensators; - Entnehmen eines Dampfmassenstroms aus dem Flüssigkeits-/Dampfkreislauf für den Fall, dass das Dampf-/Wärmekraftwerk Wärme abgeben soll, und Betrieb lediglich des Hilfskondensators bei Unterschreiten des Schwellenwerts des in den Kondensator eintretenden Dampfmassenstroms. Weil unterhalb des Schwellenwerts lediglich der Hilfskondensator betrieben wird, hat das Dampf-/Wärmekraftwerk vorteilhaft einen hohen Wirkungsgrad.

Bevorzugt weist das Verfahren den Schritt auf: - gleichzeitiges Betreiben des Hauptkondensators und des Hilfskondensators, wenn der Massenstrom des in den Hilfskondensator eintretenden Dampfs oberhalb des Schwellenwerts ist. Dadurch ist vorteilhaft sichergestellt, dass der gesamte in den Kondensator eintretende Dampfmassenstrom effizient kondensiert wird.

Es ist bevorzugt, dass der Flüssigkeits-/Dampfkreislauf Dampfturbinen mit verschiedenen Druckniveaus aufweist, der variable Dampfmassenstrom stromauf der Dampfturbine mit der niedrigsten Druckstufe entnommen wird und bei einem maximalen entnommen Massenstrom die Dampfturbine mit der niedrigsten Druckstufe von keinem Massenstrom durchströmt wird sowie bei dem maximalen entnommenen Massenstrom lediglich der Hilfskondensator betrieben wird. Wenn die Dampfturbine mit der niedrigsten Druckstufe nicht durchströmt wird, wird sie von den anderen Dampfturbinen entkoppelt, beispielsweise indem eine Kupplung zwischen der Dampfturbine mit der niedrigsten Druckstufe und den anderen Dampfturbinen ausgerückt wird. Durch das Entkoppeln ist es vorteilhaft nicht erforderlich, die Dampfturbine mit der niedrigsten Druckstufe zu durchströmen, um dadurch beispielsweise eine Ventilation zu unterbinden. In diesem Betriebszustand mit dem maximalen entnommenen Massenstrom wird lediglich der Hilfskondensator betrieben, wodurch das Dampf-/Wärmekraftwerk einen hohen Wirkungsgrad hat.

Im Folgenden wird anhand der beigefügten schematischen Zeichnungen die Erfindung näher erläutert. Es zeigen
- Figur 1: eine Schaltskizze eines Dampf-/Wärmekraftwerks und
- Figur 2: einen Schnitt durch einen Kondensator des Dampf-/Wärmekraftwerks.

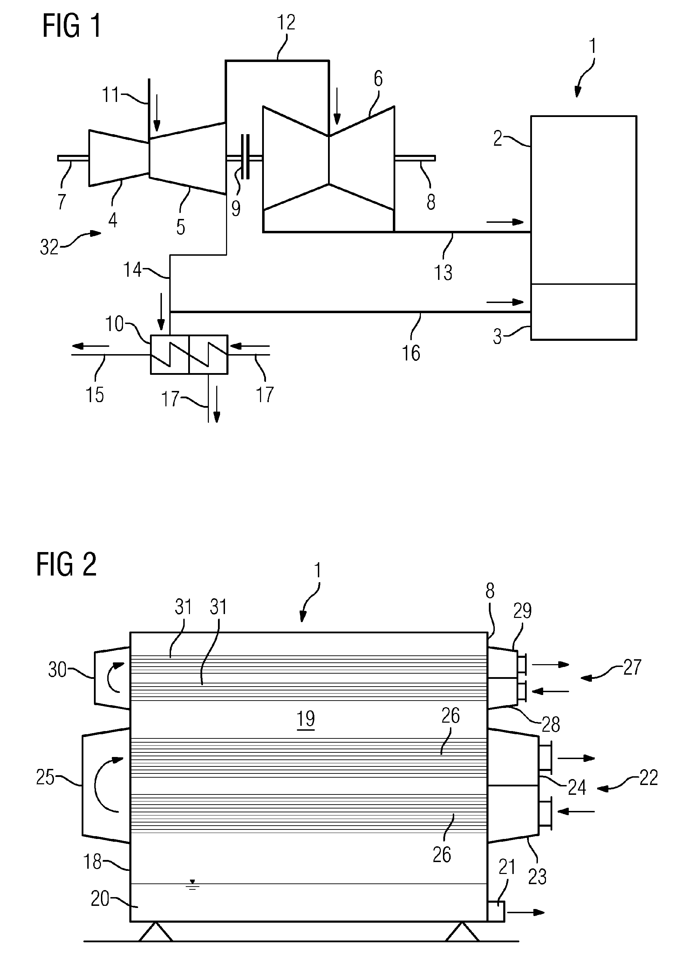

Wie es aus Figur 1 ersichtlich ist, weist ein Dampf-/Wärmekraftwerk 32 einen Flüssigkeits-/Dampfkreislauf mit einer HD-Dampfturbine 4 (Hochdruckdampfturbine), einer MD-Dampfturbine 5 (Mitteldruckdampfturbine) und einer ND-Dampfturbine 6 (Niederdruckdampfturbine), einem Kondensator 1, einem Kessel und einer Pumpe (der Kessel und die Pumpe sind nicht in Figur 1 dargestellt) auf. Die HD-Dampfturbine 4 und die MD-Dampfturbine 5 sind auf einer gemeinsamen HD/MD-Welle 7 und die ND-Dampfturbine 6 ist auf einer ND-Welle 8 angeordnet. Die HD/MD-Welle 7 und die ND-Welle 8 sind durch Einrücken einer Kupplung 9 kuppelbar und durch Ausrücken der Kupplung 9 entkuppelbar.

Die HD-Dampfturbine 4 und die MD-Dampfturbine 5 werden aus dem Kessel via eine Frischdampfleitung 11 mit Frischdampf gespeist. Der Abdampf aus der MD-Dampfturbine 5 strömt entweder via eine ND-Zuleitung 12 in die ND-Dampfturbine 6 oder der Abdampf wird dem Flüssigkeits-/Dampfkreislauf via eine Heizkondensatorzuleitung 14 entnommen. Über das Verhältnis des Dampfmassenstroms in der ND-Zuleitung 12 zu dem Dampfmassenstrom in der Heizkondensatorzuleitung 14 kann das Verhältnis von erzeugtem Strom zu abgegebener Wärme des Dampf-/Wärmekraftwerks eingestellt werden. Für den Fall, dass der gesamte Abdampf der MD-Dampfturbine 5 aus dem Flüssigkeits-/Dampfkreislauf entnommen wird, wird die ND-Welle 8 von der HD/MD-Welle 7 durch Ausrücken der Kupplung 9 entkoppelt. Alternativ ist es möglich, dass eine Mehrwellenanlage vorgesehen wird, in der die ND-Dampfturbine 6 und die HD/MD-Dampfturbinen 4, 5 ständig auf verschiedenen, entkoppelten Wellen angeordnet sind und jeweils einen separaten Generator antreiben.

Der Abdampf aus der ND-Dampfturbine 6 wird via eine ND-Abdampfleitung 13 dem Kondensator 1 zugeführt, wo der Abdampf in eine Flüssigkeit umgewandelt wird. Die Flüssigkeit wird anschließend mittels der Pumpe wieder dem Kessel zugeführt. Der dem Flüssigkeits-/Dampfkreislauf via die Heizkondensatorzuleitung 14 entnommene Dampfmassenstrom wird einem Heizkondensator 10 zugeführt, in dem der Dampf kondensiert wird und Wärme an einen Wärmekreislauf 17 abgegeben wird. Die in dem Heizkondensator 10 gebildete Flüssigkeit wird via eine Heizkondensatorableitung 15 dem Kessel zugeführt. Das Dampf-/Wärmekraftwerk weist eine Notdampfleitung 16, via die in einem Störfall der dem Flüssigkeits-/Dampfkreislauf entnommene Dampfmassenstrom dem Kondensator 1 zuführbar ist. Der Störfall kann beispielsweise durch einen Ausfall des Heizkondensators 10 verursacht sein.

Wie es aus Figuren 1 und 2 ersichtlich ist, weist der Kondensator 1 einen Hauptkondensator 2 und einen Hilfskondensator 3 auf, wobei der Hauptkondensator 2 und der Hilfskondensator 3 in einem gemeinsamen Mantelgehäuse 18 untergebracht sind. Das Mantelgehäuse 18 begrenzt in seinem Inneren einen Dampfraum 19. Der aus der ND-Abdampfleitung 13 oder Notdampfleitung 16 kommende Dampf tritt beispielsweise von oben in den Dampfraum 19 ein. Der Dampf wird in dem Hauptkondensator 2 und/oder dem Hilfskondensator 3 in eine Flüssigkeit umgewandelt und die Flüssigkeit fällt in einem an dem Boden des Kondensators 1 angeordneten Kondensatsammler 20. Von dem Kondensatsammler wird die Flüssigkeit via einen Kondensataustritt 21 von dem Kondensator 1 weggeströmt und via die Pumpe dem Kessel zugeführt.

Der Hauptkondensator 2 weist ein im Inneren des Mantelgehäuses 18 verlaufendes Rohrbündel 26 und der Hilfskondensator 3 weist ein im Inneren des Mantelgehäuses 18 verlaufendes Rohrbündel 31 auf, wobei die Rohrbündel 26, 31 von einem Kühlfluid, insbesondere Wasser, durchströmbar sind. Der Hauptkondensator 2 weist einen Hauptkühlfluidkreislauf 22 mit dem Rohrbündel 26 auf, wobei der Hauptkühlfluidkreislauf 22 beispielsweise einen Eintritt 23 in das Rohrbündel 26, eine Umkehrkammer 25 und einen Austritt 24 aufweist. Der Hilfskondensator 3 weist einen Hilfskühlfluidkreislauf 27 mit dem Rohrbündel 31 auf, wobei der Hilfskühlfluidkreislauf 27 beispielsweise einen Eintritt 27 in das Rohrbündel 31, eine Umkehrkammer 30 und einen Austritt 29 aufweist. Der Hauptkühlfluidkreislauf 22 und der Hilfskühlwasserkreislauf 27 sind voneinander getrennt von dem Kühlfluid durchströmbar und damit unabhängig voneinander betreibbar.

In dem Fall der maximalen Menge an erzeugter Strom, also wenn kein Dampfmassenstrom dem Flüssigkeits-/Dampfkreislauf via die Heizkondensatorzuleitung entnommen wird, werden sowohl der Hauptkondensator 2 als auch der Hilfskondensator 3 betrieben. Dies bedeutet, dass sowohl der Hauptkühlfluidkreislauf 22 als auch der Hilfskühlfluidkreislauf 27 von dem Kühlfluid durchströmt werden. Wird nun die Menge an erzeugtem Strom verringert und gleichzeitig die Menge an via die Heizkondensatorzuleitung 14 abgegebener Wärme erhöht, reduziert sich der in den Kondensator 1 eintretende Dampfmassenstrom.

Unterschreitet der in den Kondensator 1 eintretende Dampfmassenstrom einen Schwellenwert, wird lediglich der Hilfskondensator 3 betrieben, was bedeutet, dass nur noch der Hilfskühlfluidkreislauf 27 von dem Kühlfluid durchströmt wird.

Der Hilfskondensator 3 ist derart ausgelegt, dass er in einem Störfall den gesamten via die Heizkondensatorzuleitung 14 entnommenen und via die Notdampfleitung 16 in den Kondensator 1 eingeleiteten Dampfmassenstrom kondensieren kann. Der Hilfskondensator 3 ist dazu auch dann in der Lage, wenn ein maximaler Dampfmassenstrom dem Flüssigkeits-/Dampfkreislauf entnommen wird, also in dem Fall, in dem die Dampfturbine 6 mit der niedrigsten Druckstufe nicht durchströmt wird. Dazu ist der Hilfskondensator 3 für höhere Dampfdrücke als der Hauptkondensator 2 ausgelegt.

Es ist denkbar, dass der Hauptkondensator 2 mit einer Edelstahlberohrung und kontinuierlich betriebener Rohrreinigungsanlage ausgeführt ist und der Hilfskondensator durch die Wahl eines korrosionsbeständigen Werkstoffs, insbesondere Titan, ohne Rohrreinigungsanlage betrieben wird.

Anhand eines Beispiels wird im Folgenden das erfindungsgemäße Verfahren näher erläutert.

Das beispielhafte Verfahren zum Betreiben eines Dampf-/Wärmekraftwerks 32 mit einem einen Kondensator 1 aufweisenden Flüssigkeits-/Dampfkreislauf, aus dem stromauf des Kondensators 1 für eine variable Wärmeabgabe aus dem Dampf-/Wärmekraftwerk ein variabler Dampfmassenstrom entnehmbar ist, wobei der Kondensator 1 einen Hauptkondensator 2 und einen Hilfskondensator 3 aufweist, weist die Schritte auf: - kein Entnehmen eines Dampfmassenstroms aus dem Flüssigkeits-/Dampfkreislauf für den Fall, dass das Dampf-/Wärmekraftwerk 32 keine Wärme abgeben soll, und Betrieb des Hauptkondensators 2 und des Hilfskondensators 3; - Entnehmen eines Dampfmassenstroms aus dem Flüssigkeits-/Dampfkreislauf für den Fall, dass das Dampf-/Wärmekraftwerk 32 Wärme abgeben soll, und Betrieb lediglich des Hilfskondensators 3 bei Unterschreiten des Schwellenwerts des in den Kondensator 1 eintretenden Dampfmassenstroms; - Gleichzeitiges Betreiben des Hauptkondensators 2 und des Hilfskondensators 3, wenn der Massenstrom des in den Hilfskondensator 3 eintretenden Dampfs oberhalb des Schwellenwerts ist.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

## Patentansprüche

1. Dampf-/Wärmekraftwerk mit einem einen Kondensator (1) aufweisenden Flüssigkeits-/Dampfkreislauf, aus dem stromauf des Kondensators (1) für eine variable Wärmeabgabe aus dem Dampf-/Wärmekraftwerk ein variabler Dampfmassenstrom entnehmbar ist,
wobei der Kondensator (1) einen Hauptkondensator (2) und einen Hilfskondensator (3) aufweist, die derart eingerichtet sind, dass bei einem Unterschreiten eines Schwellenwerts des in den Kondensator (1) eintretenden Dampfmassenstroms lediglich der Hilfskondensator (3) betreibbar ist.

2. Dampf-/Wärmekraftwerk gemäß Anspruch 1,
wobei oberhalb des Schwellenwerts der Hauptkondensator (2) und der Hilfskondensator (3) gleichzeitig betreibbar sind.

3. Dampf-/Wärmekraftwerk gemäß Anspruch 1 oder 2,
wobei der Hauptkondensator (2) und der Hilfskondensator (3) getrennt voneinander betreibbar sind, indem der Hauptkondensator (2) einen Hauptkühlfluidkreislauf (22) und der Hilfskondensator (3) einen Hilfskühlfluidkreislauf (26) aufweist,
wobei der Hauptkühlfluidkreislauf (22) und der Hilfskühlfluidkreislauf (26) unabhängig voneinander betreibbar sind.

4. Dampf-/Wärmekraftwerk gemäß einem der Ansprüche 1 bis 3, wobei der Hauptkondensator (2) und der Hilfskondensator (3) in einem einzigen Mantelgehäuse (18) angeordnet sind.

5. Dampf-/Wärmekraftwerk gemäß einem der Ansprüche 1 bis 4, wobei der Kondensator (1) einen einzigen Kondensatsammler (20) aufweist, der die in dem Hauptkondensator (2) und/oder Hilfskondensator (3) gebildete Flüssigkeit auffängt.

6. Dampf-/Wärmekraftwerk gemäß einem der Ansprüche 1 bis 5, wobei der Flüssigkeits-/Dampfkreislauf Dampfturbinen (4, 5, 6) mit verschiedenen Druckniveaus aufweist, der variable Dampfmassenstrom stromauf der Dampfturbine (6) mit der niedrigsten Druckstufe entnehmbar ist und der Hilfskondensator (3) derart eingerichtet ist, dass mit ihm der entnommene Dampfmassenstrom kondensierbar ist.

7. Dampf-/Wärmekraftwerk gemäß Anspruch 6,
wobei der Hilfskondensator (3) derart eingerichtet ist, dass mit ihm ein maximaler entnommener Dampfmassenstrom kondensierbar ist, bei dem die Dampfturbine (6) mit der niedrigsten Druckstufe von keinem Massenstrom durchströmt wird.

8. Verfahren zum Betreiben eines Dampf-/Wärmekraftwerks (32) gemäß einem der Ansprüche 1 bis 7, mit den Schritten:
- kein Entnehmen eines Dampfmassenstroms aus dem Flüssigkeits-/Dampfkreislauf für den Fall, dass das Dampf-/Wärmekraftwerk (32) keine Wärme abgeben soll, und Betrieb des Hauptkondensators (2) und des Hilfskondensators (3);
- Entnehmen eines Dampfmassenstroms aus dem Flüssigkeits-/Dampfkreislauf für den Fall, dass das Dampf-/Wärmekraftwerk (32) Wärme abgeben soll, und Betrieb lediglich des Hilfskondensators (3) bei Unterschreiten des Schwellenwerts des in den Kondensator (1) eintretenden Dampfmassenstroms.

9. Verfahren gemäß Anspruch 8,
mit dem Schritt:
- gleichzeitiges Betreiben des Hauptkondensators (2) und des Hilfskondensators (3), wenn der Massenstrom des in den Hilfskondensator (3) eintretenden Dampfs oberhalb des Schwellenwerts ist.

10. Verfahren gemäß Anspruch 8 oder 9,
wobei der Flüssigkeits-/Dampfkreislauf Dampfturbinen (4, 5, 6) mit verschiedenen Druckniveaus aufweist, der variable Dampfmassenstrom stromauf der Dampfturbine (6) mit der niedrigsten Druckstufe entnommen wird und bei einem maximalen entnommen Massenstrom die Dampfturbine (6) mit der niedrigsten Druckstufe von keinem Massenstrom durchströmt wird,
wobei bei dem maximalen entnommenen Massenstrom lediglich der Hilfskondensator (3) betrieben wird.
